(19) **Europäisches Patentamt / European Patent Office / Office européen des brevets**

(11) **EP 1 578 110 B1**

(12) **EUROPEAN PATENT SPECIFICATION**

(45) Date of publication and mention
of the grant of the patent:
**19.01.2011 Bulletin 2011/03**

(51) Int Cl.:
***H04N 1/407*** (2006.01)

(21) Application number: **05005143.2**

(22) Date of filing: **09.03.2005**

(54) **Image processing apparatus, image processing system and image processing method**

Bildverarbeitungsvorrichtung, -system und -verfahren

Appareil, système et procédé de traitement d'image

(84) Designated Contracting States:
**DE FR GB NL**

(30) Priority: **18.03.2004 JP 2004077631**

(43) Date of publication of application:
**21.09.2005 Bulletin 2005/38**

(73) Proprietor: **Olympus Corporation
Shibuya-ku, Tokyo (JP)**

(72) Inventor: **Toyoda, Tetsuya, c/o Int. Prop. Dept.
Hachioji-shi
Tokyo (JP)**

(74) Representative: **von Hellfeld, Axel
Wuesthoff & Wuesthoff
Patent- und Rechtsanwälte
Schweigerstrasse 2
81541 München (DE)**

(56) References cited:
**EP-A- 1 347 629** **WO-A-2004/008754**
**US-A1- 2002 036 697** **US-A1- 2003 174 886**

**Description**

The present invention relates to an imaging apparatus, an image processing apparatus, an image processing system and an image processing method.

In conventional digital cameras, there has been known a digital camera provided with a function which directly stores image data yet to be subjected to image processing (which will be referred to as raw data hereinafter) in a recording medium or the like. The raw data is a kind of data obtained by converting an output from an imaging element into a digital image as it is. Therefore, the raw data cannot be viewed or printed as an image if no processing is applied thereto. In that sense, it is assumed that the raw data is subjected to image processing in a dedicated image processing apparatus or a PC application having an image processing function.

Usually, elements (e.g., gradation characteristics, color reproduction, and white balance) concerning image quality when performing image processing in a digital camera are determined at the time of image capturing. Conversion from the raw data into image data subjected to image processing is irreversible. Again changing gradation characteristics, white balance or the like after image processing may lead to a deterioration in image quality as compared with the case where gradation conversion or white balance processing is directly applied to the raw data. On the other hand, when the raw data is subjected to image processing after image capturing, elements concerning an image quality can be freely changed without a deterioration in image quality, and this is recognized as a utility value of the raw data.

Furthermore, the exposure of an image is usually determined at the time of capturing an image. There has been proposed an apparatus provided with a function which demonstrates an effect which is equivalent to the exposure correction in image capturing when raw data is developed. Specifically, a technique which simulates the exposure correction in image capturing by amplifying captured raw data based on a predetermined gain is commonly used.

The exposure correction is generally represented by an exponentiation of 2, and raw data after the exposure correction in each pixel can be calculated by the following expression.

$$\text{Raw data (after exposure correction)} = \text{Raw data (before exposure correction)} \times 2^{(\text{exposure correction value})}$$

By performing predetermined image processing including gradation conversion to raw data with which exposure correction is simulated, an image closer to an image subjected to exposure correction in image capturing can be obtained.

Moreover, there are a technique which changes an apparent exposure by varying gradation conversion characteristics (more specifically, a gradation conversion table) rather than applying a predetermined gain to raw data like the above expression, a technique which previously stores a plurality of gradation conversion tables in an image processing apparatus, and a technique which transmits a plurality of gradation conversion tables attached to raw data to an image processing apparatus. For example, Jpn. Pat. Appln. KOKAI Publication No. 2003-242163 proposes that image data and its attached information (raw data information, digital exposure correction processing information and others) are created as one file on an image recording apparatus side and processing with respect to the image data is changed based on read information on an information processing apparatus side.

However, in the technique which simulates the exposure correction by applying a predetermined gain to raw data before gradation conversion, data in the vicinity of saturation may exceed a bit range at the time of a positive correction of the exposure and gradation information in the vicinity of saturation which exists in the raw data before the correction may be lost. Additionally, at the time of a negative correction of the exposure, since a saturated data value is lowered, an output range cannot be fully exploited, and a white subject may be changed to a gray subject or may be colored in the vicinity of saturation.

Further, in the technique which changes the apparent exposure by varying gradation conversion characteristics, although manual creation of a gradation conversion table is commonly performed, simulating a correct change in exposure in accordance with an exposure correction value and creating a gradation conversion table which is used to reproduce a gradation in the vicinity of saturation are very troublesome tasks.

Furthermore, the technique which previously stores a plurality of gradation conversion tables in an image processing apparatus presumes that a reference for an exposure when raw data which should be processed is captured is known in advance. However, in general, since concepts of a proper exposure level vary depending on models of cameras or design concepts of manufacturers, a gradation conversion table which differs in accordance with each model or each manufacturer is used. Therefore, a gradation conversion table corresponding to each camera must be stored in advance, and hence a capacity of a memory which stores each gradation conversion table is increased. Moreover, when a gradation conversion table for a camera developed after release of an image processing apparatus is not stored, image processing cannot be performed. Jpn. Pat. Appln. KOKAI Publication No. 2003-242163 does not describe a technique which performs exposure correction that is independent of model and design concept of manufacturer.

Additionally, in the technique which transfers a gradation conversion table attached to image data to an image processing apparatus, since a data capacity is increased for a quantity corresponding to the attached data, a transfer rate of the image data is affected by this increase in data capacity. Further, a utility value of raw data other than gradation characteristics realized by performing image processing using the attached gradation conversion table is deteriorated.

US 2003/0174886 A1 relates to an image processing apparatus, image processing system, image processing method, storage medium and program, which can always provide an excellent processed image, wherein an analysis unit analyzes condition information representing a condition at a time when an image is obtained and being included in image information, and determines an algorithm of an image correction process for the image based on the analysed result. This document discloses a file interface for inputting an image before gradation correction, a gradation correction storing means for storing a plurality of gradation correction curves and gradation correction selecting means for selecting one of the plurality of gradation correction curves based on the condition in formation However, this document does not disclose an exposure reference value comprising the value LVO which is a pixel value of raw data when capturing an image and the value LV1 which is a pixel value after subjection of LVO to gradation conversion. It is also silent about a file interface for inputting an exposure correction value and an exposure correction value changing means for changing the exposure value based on the input exposure correction value.

EP 1 523 182 A1 refers to output image adjustment of image data, wherein a CPU calculates modified brightness correction amount tCurve_Y with consideration of exposure correction amount (or exposure value) EV if photography information is included in image data. Specifically, the modified brightness correction amount tCurve_Y is calculated by dividing original brightness correction amount tCurve_Yorg by $2^{|EV|}$. Therefore, it decreases in geometrical progression as the exposure correction amount increases. The CPU applies the obtained modified brightness correction amount tCurve_Y to a tone curve to adjust image quality including brightness. More specifically, it uses the modified brightness correction amount tCurve_Y to modify the characteristics of the tone curve, and then uses the modified tone curve to adjust the image quality of the image data.

US 2002/0036697 A1 relates to an imaging apparatus, wherein a digital camera which can change gradation properties comprises a CCD image pickup element for photographing a subject, an exposure control mechanism for controlling an exposure on the image pickup element, a digital processing circuit including a gradation converting circuit for being capable of generating image signals having different gradation properties (gamma properties) based on the output signal from the image pickup element, and a system controller including a selecting circuit for selecting one of the different gradation properties, which is used in the gradation converting circuit. In the digital camera, to suppress the change of a sensitivity (output level) due to a change of the gradation property, the exposure control mechanism changes a control target value to control the exposure in accordance with the selected gamma value so that the output level is maintained at constant in the average exposure.

It is an object of the present invention to provide an image processing apparatus, an image processing system and an image processing method which can perform appropriate gradation conversion processing of gradation characteristics with respect to raw data captured based on an arbitrary exposure reference, and can appropriately change an exposure of an image in accordance with preferences of a user.

According to a first aspect of the present invention, there is provided an image processing apparatus as defined by independent claim 1.

According to a second aspect of the present invention, there is provided an image processing apparatus as defined by independent claim 2. Preferred embodiments of the image processing apparatus according to the first and second aspect of the invention are defined by claims 3 and 4.

According to a third aspect of the present invention, there is provided an image processing system as defined by claim 5.

According to a forth aspect of the present invention, there is provided an image processing system as defined by claim 6.

According to a fifth aspect of the present invention, there is provided an image processing method as defined by independent claim 7.

According to a sixth aspect of the present invention, there is provided an image processing method as defined by independent claim 8.

This summary of the invention does not necessarily describe all necessary features so that the invention may also be a sub-combination of these described features.

The invention can be more fully understood from the following detailed description when taken in conjunction with the accompanying drawings, in which:

FIG. 1      is a block diagram showing a configuration of an image processing system according to an embodiment of the present invention;

FIG. 2     is a block diagram showing a configuration of a digital camera as an example of an imaging apparatus;

FIG. 3A    is a block diagram of a PC as an example of an image processing apparatus;

FIG. 3B    is a view showing a table which is used to obtain a gradation conversion table;

FIG. 4     is a view showing an example of a gradation conversion table;

FIG. 5A    is a view showing correction of a gradation conversion table based on contrast correction;

FIG. 5B    is a view showing gradation characteristic curves of FIG. 5A;

FIG. 6A    is a view showing correction of a gradation conversion table based on exposure correction;

FIG. 6B    is a view showing gradation characteristic curves of FIG. 6A;

FIG. 6C    is an enlarged view showing the vicinity of a saturation area of FIG. 6B;

FIG. 7     is a flowchart showing processing on a digital camera side for illustrating an image processing method according to the embodiment of the present invention;

FIG. 8     is a flowchart showing processing on an image processing apparatus side for illustrating an image processing method according to the embodiment of the present invention; and

FIG. 9     is a block diagram showing a modification of the present invention.

An embodiment according to the present invention will now be described hereinafter with reference to the accompanying drawings.

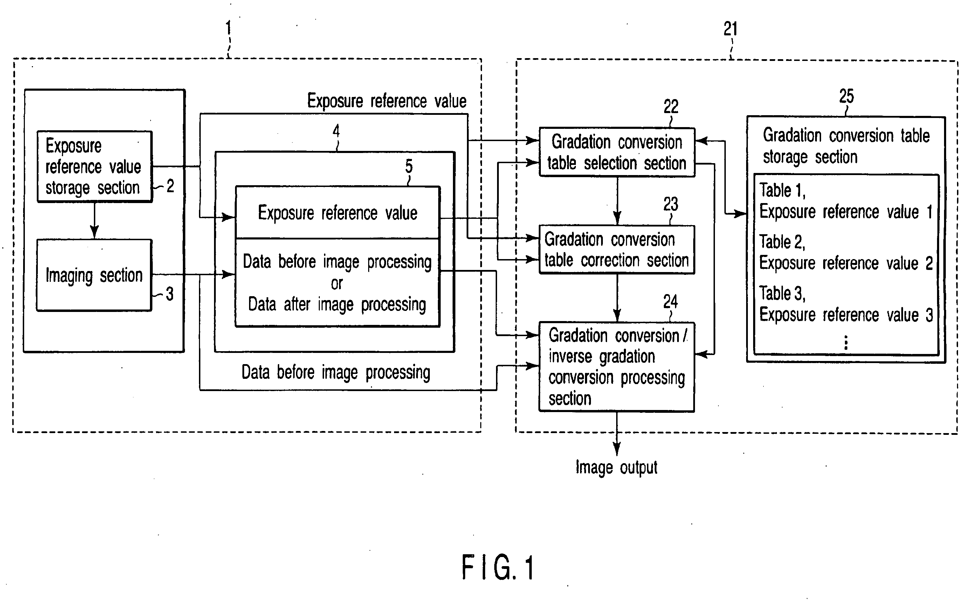

FIG. 1 is a block diagram illustrating a conceptual configuration of an image processing system according to an embodiment of the present invention. An image processing system depicted in FIG. 1 comprises an imaging apparatus 1 and an image processing apparatus 21.

The imaging apparatus 1 will be first explained. The imaging apparatus 1 comprises an exposure reference value storage section 2, an imaging section 3 and a recording medium 4.

In the imaging section 3, imaging of a non-illustrated subject is performed in accordance with an exposure reference value (to be described in detail later) stored in the exposure reference value storage section 2 and image data is thereby acquired. Thereafter, image processing is performed with respect to the image data in accordance with a use application.

After the image data is acquired in the imaging section 3, the exposure reference value is added to header information in the acquired image data in order to generate an image file 5, and this generated image file 5 is recorded in the recording medium 4.

The image processing apparatus 21 will now be described. The image processing apparatus 21 is an image processing apparatus capable of executing gradation conversion processing and processing corresponding to inverse gradation conversion. The image processing apparatus 21 comprises a gradation conversion table selection section 22, a gradation conversion table correction section 23, a gradation conversion/inverse gradation conversion processing section 24, and a gradation conversion table storage section 25. Here, the processing corresponding to inverse conversion of gradation conversion is processing which converts image data subjected to gradation conversion processing into image data which is substantially linear with respect to a light quantity before gradation conversion is applied. In this processing, the processed data does not necessarily match with image data before gradation conversion. However, further appropriate processing can be executed by performing such processing even when processing such as a white balance correction is again effected with respect to image data after image processing. It is to be noted that processing corresponding to inverse conversion of gradation conversion will be simply referred to as inverse gradation conversion processing hereinafter.

The image file 5 generated in the imaging apparatus 1 is input to the image processing apparatus 21. In this embodiment, the exposure reference value stored in the exposure reference value storage section 2 and the image data acquired in the imaging section 3 can be directly input to the image processing apparatus 21 without generating the image file 5 in the imaging apparatus 1.

After the image file 5 is input to the image processing apparatus 21, when gradation conversion processing for an image is commanded by a user, the gradation conversion table selection section 22 selects a gradation conversion table in accordance with the exposure reference value. In this example, as shown in FIG. 1, the gradation conversion table storage section 25 stores a plurality of gradation conversion tables corresponding to a plurality of exposure reference values therein. The gradation conversion table selection section 22 selects a gradation conversion table corresponding to the input exposure reference value from the gradation conversion tables stored in the gradation conversion table storage section 25.

Thereafter, when a gradation conversion table correction is commanded by a user for example, the gradation conversion table correction section 23 corrects the gradation conversion table.

Then, different processing is executed depending on whether image processing (gradation conversion processing) is performed with respect to the image data acquired by the imaging section 3.

When the gradation conversion processing is not effected to the input image data, the gradation conversion/ inverse gradation conversion processing section 24 executes the gradation conversion processing for the input image data based on the gradation conversion table selected by the gradation conversion table selection section 22 and corrected by the gradation conversion table correction section 23.

In contrast, when the gradation conversion processing is performed with respect to the input image data, the gradation conversion/inverse gradation conversion processing section 24 executes the inverse gradation conversion processing with respect to the input image data based on the gradation conversion table selected by the gradation conversion table selection section 22 and corrected by the gradation conversion table correction section 23.

The image processing system depicted in FIG. 1 will now be described in more detail.

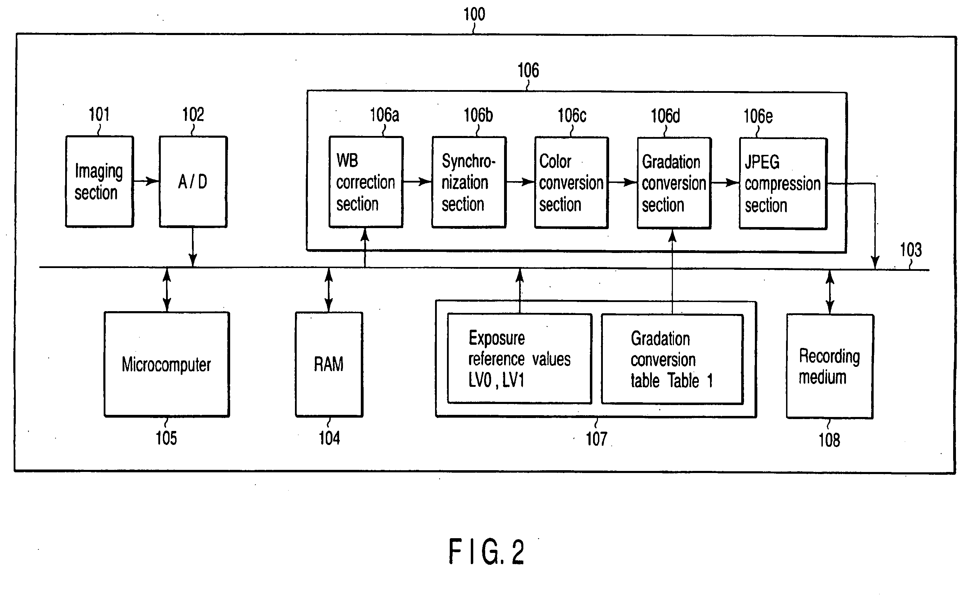

FIG. 2 is a block diagram showing a configuration of a digital camera 100 as an example of the imaging apparatus 1 depicted in FIG. 1. The digital camera 100 illustrated in FIG. 2 comprises an imaging section 101, an analog-to-digital conversion section 102, a bus line 103, an RAM 104, a microcomputer 105, an image processing section 106, an ROM 107 and a recording medium 108.

The imaging section 101 comprises a capturing optical system, an imaging element (a CCD) or the like. The imaging section 101 forms an image of a light beam from a non-illustrated subject on the imaging element through the capturing optical system. Then, the image-formed light beam is converted into an electrical signal in the imaging element. The analog-to-digital conversion section 102 converts an analog image signal output from the imaging section 101 into digital image data. This image data is temporarily stored in the RAM 104 through the bus line 103. It is to be noted that the RAM 104 temporarily stores image data and also temporarily stores various kinds of data at the time of a distance measuring arithmetic operation, a photometric arithmetic operation and others. Image data immediately after output from the analog-to-digital conversion section 102 will be referred to as raw data hereinafter.

Then, different processing is executed depending on whether an image quality mode in image data recording is set to a JPEG mode (an image quality mode in which image processing is effected) or set to a raw mode (an image quality mode in which no image processing is carried out).

When the image quality mode is set to the JPEG mode, the raw data stored in the RAM 104 is input to the image processing section 106 through the bus line 103. The image processing section 106 comprises a white balance (WB) correction section 106a, a synchronization section 106b, a color conversion section 106c, a gradation conversion section 106d, and a JPEG compression section 106e. The WB correction section 106a performs white balance correction processing which adjusts an RGB gain in an image.

The synchronization section 106b performs synchronization processing which synchronizes Bayer data. The color conversion section 106c executes a color matrix arithmetic operation which standardizes RGB data. Further, the gradation conversion section 106d performs gradation conversion processing based on the exposure reference value and the gradation conversion table stored in the ROM 107.

The exposure reference value will now be described. The exposure reference value is a value which serves as a reference for an exposure in image capturing. In this embodiment, as the exposure reference value, a value as a target of an exposure control (LV0) and a value obtained by subjecting LV0 to gradation conversion (LV1) are used. Giving a more concrete explanation, LV0 is a pixel value of raw data (i.e., an output from the analog-to-digital conversion section 102) obtained when capturing an image of an even surface under the automatic exposure control, and LV1 is a pixel value after subjecting LV0 to gradation conversion in accordance with a gradation conversion table previously stored in the ROM 107.

The image data section 106 is input to the JPEG compression section 106e. The JPEG compression section 106e subjects the input image data to JPEG compression. The compressed image data will be referred to as JPEG data hereinafter. Subsequently, header information is added to the JPEG data, thereby generating a JPEG file. In this embodiment, as the header information, white balance gain in the white balance correction processing, color conversion matrix in the color conversion processing, and image quality mode in image capturing as well as exposure reference values LV0 and LV1 are recorded.

The JPEG file generated by the image processing section 106 in this manner is controlled by the microcomputer 105, and recorded in the recording medium 108. The microcomputer 105 is a control section which is in charge of controlling the entire digital camera 100, and also executes focusing control of the capturing optical system or drive control of the imaging element in the imaging section 101, arithmetic operation controls such as the distance measuring arithmetic operation or the photometric arithmetic operation, and others. Furthermore, a detachable recording medium such as a memory card is assumed as the recording medium 108, but the recording medium 8 may be of a built-in type if data can be transmitted/received between the digital camera 100 and the image processing apparatus.

Moreover, when the image quality mode is set to the raw mode, the header information is added to the raw data output from the analog-to-digital conversion section 102, thereby generating a raw file. The thus generated raw file is recorded in the recording medium 108 under control of the microcomputer 105.

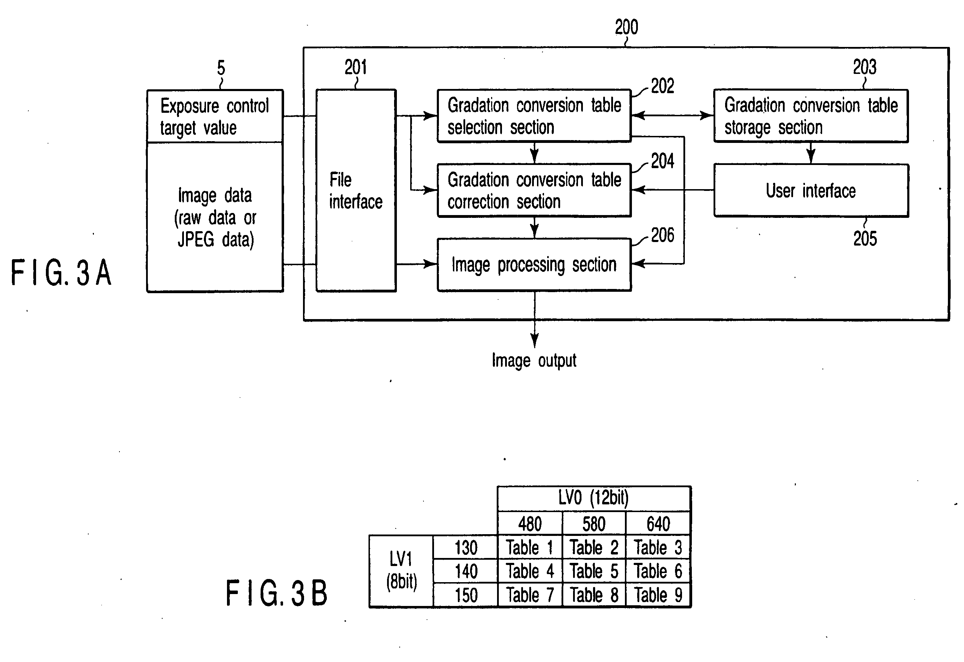

FIG. 3A is a block diagram showing a configuration of a PC 200 as an example of the image processing apparatus 21 depicted in FIG. 1. The PC 200 illustrated in FIG. 3A comprises a file interface 201, a gradation conversion table selection section 202, a gradation conversion table storage section 203, a gradation conversion table correction section 204, a user interface 205, and an image processing section 206. It is to be noted that some of these constituent elements are realized by application software in the PC.

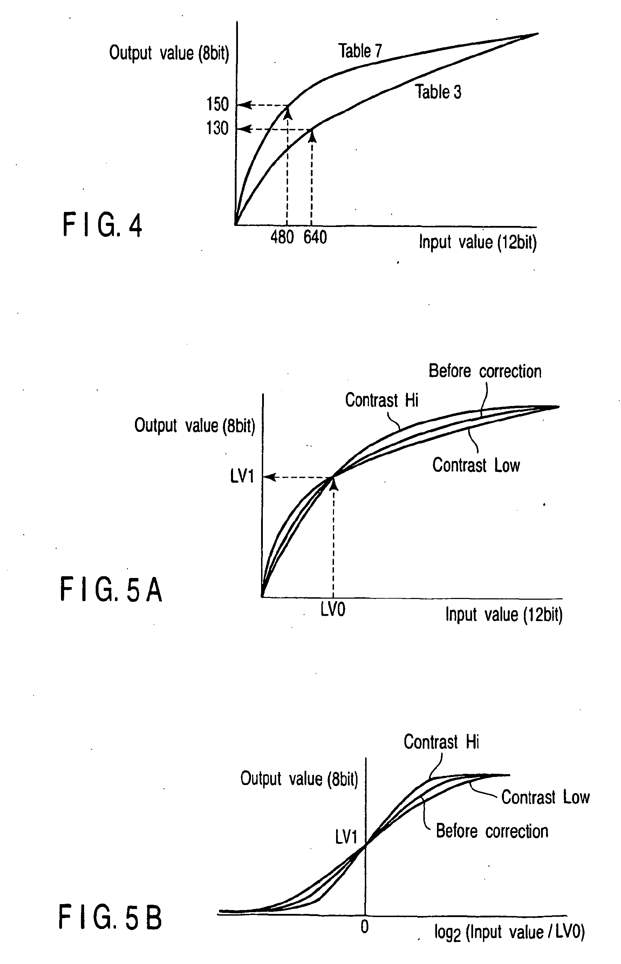

When the image file 5 is input to the PC 200 through the file interface 201, the gradation conversion table selection section 202 reads the exposure reference values LV0 and LV1 recorded in the image file 5. Then, the gradation conversion table corresponding to LV0 and LV1 is selected from the gradation conversion table storage section 203. FIG. 3B shows a table of the gradation conversion table stored in the gradation conversion table storage section 203. That is, the gradation conversion table storage section 203 stores a plurality of gradation conversion tables (nine tables Table 1 to Table 9 in FIG. 3B) corresponding to a plurality of sets of LV0 and LV1 therein. The gradation conversion table selection section 202 selects the gradation conversion table which is closest to the read set of LV0 and LV1. FIG. 4 shows an example of the gradation conversion tables. At the time of gradation conversion, an input (a pixel value represented by 12 bits of 0 to 4095) from the analog-to-digital conversion section 102 is converted into a pixel value represented by eight bits of 0 to 255 in accordance with the gradation conversion tables shown in FIG. 4.

When changing a contrast of an image is commanded or an exposure correction of an image is instructed through the user interface 205 such as a keyboard or a pointing device, the gradation conversion table correction section 204 corrects the gradation conversion table. In this example, the exposure correction is not carried out by the digital camera 100, but it means exposure correction executed as post-processing of the PC 200.

A description will now be given as to a correction of the gradation conversion table when a change of contrast is commanded. FIG. 5A is a view showing a correction example of the gradation conversion table based on the contrast change, and FIG. 5B is a view showing gradation characteristic curves of FIG. 5A.

For example, when an increase in contrast of an image is instructed by a user, the gradation conversion table (before the correction) depicted in FIG. 5A is corrected to a gradation conversion table (contrast Hi). On the other hand, when a reduction in contrast of an image is commanded by a user, the gradation conversion table (before the correction) is corrected to a gradation conversion table (contrast Low). Here, when correcting the gradation conversion table in this embodiment, the gradation conversion table is corrected to run through a coordinate of (LV0, LV0) shown in FIG. 5A. This correction can be effected in such a manner that a gradation conversion table is newly generated in accordance with a contrast indicated by a user. Additionally, it is also possible to store a plurality of gradation conversion tables corresponding to contrast changes in the gradation conversion table storage section 203 and select a gradation conversion table from the gradation conversion table storage section 203 in accordance with the contrast indicated by a user. Further, when a gradation conversion table corresponding to the contrast indicated by a user is not stored, a new gradation conversion table may be generated from gradation conversion tables close to that contrast by an interpolation arithmetic operation.

As described above, in this embodiment, since exposure reference values LV0 and LV1 are simultaneously recorded with image data when generating an image file, a gradation conversion table which runs through a coordinate of (LV0, LV1) can be readily generated on the PC 200 side. In this example, as described above, since LV0 and LV1 are values which serve as a reference for an exposure in image capturing, the contrast of an image alone can be changed while maintaining an appropriate exposure by correcting a gradation conversion table without changing these values.

Furthermore, FIG. 5B represents the gradation characteristic curves of FIG. 5A. Here, in FIG. 5B, since the horizontal axis represents $\log_2$ (an input value/LV0), the vertical axis shows LV1 when the horizontal axis shows 0 (an input value = LV0). A curve before the correction and a curve after the contrast change are both curves which run through (0, LV1), halftone characteristics alone have different curves.

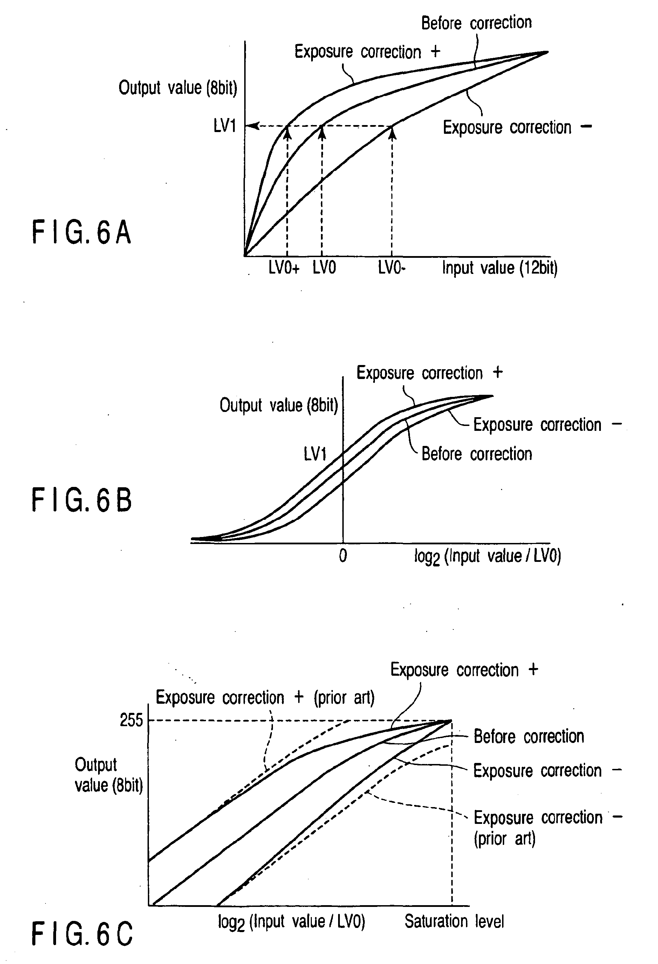

A description will now be described as to a correction of a gradation conversion table when exposure correction is instructed. FIG. 6A is a view showing a correction of a gradation conversion table based on an exposure correction, and FIG. 6B is a view showing gradation characteristic curves of FIG. 6A. Moreover, FIG. 6C is an enlarged view showing the vicinity of a saturation area of the gradation characteristic curves of FIG. 6B.

For example, when a user instructs to correct the exposure to the positive side, the gradation conversion table (before the correction) shown in FIG. 6A is corrected to a gradation conversion table (exposure correction +). On the other hand, when a user instructs to correct the exposure to the negative side, the gradation conversion table is corrected to a gradation conversion table (exposure correction -). Here, in case of the exposure correction, LV0 is changed based on the following expression:

$$\text{LV0 (after the exposure correction)} = \text{LV0 (before the exposure correction)} \times 2^{(-\text{exposure correction value})} \quad \text{(Expression 1)}$$

Then, the gradation conversion table is corrected to run through LV0 (after the exposure correction) and LV1. It is to be noted that LV1 is not a value obtained by subjecting LV0 (after the exposure correction) to gradation conversion, but it is LV1 before the exposure correction. As a result, the exposure of an entire image can be changed without varying the reference exposure. It is to be noted that the exposure correction value is a value indicative of a level of correction performed with respect to the exposure, i.e., a level of a gain with which raw data is amplified. This exposure correction value is specified by a user.

In this embodiment, since LV0 and LV1 are recorded in the image file 5, such an inappropriate exposure correction that an output is saturated or an output does not reach a saturation level (pixel value 255) as indicated by broken lines in FIG. 6C is not carried out. Further, it is possible to perform an appropriate exposure correction taking characteristics of the digital camera side into consideration.

After a gradation conversion table is corrected in accordance with a use application, gradation conversion processing or inverse gradation conversion processing of image data is effected based on the corrected gradation conversion table.

An image processing method which is performed by the image processing system comprising the digital camera 100 and the PC 200 will now be described in detail with reference to a flowchart.

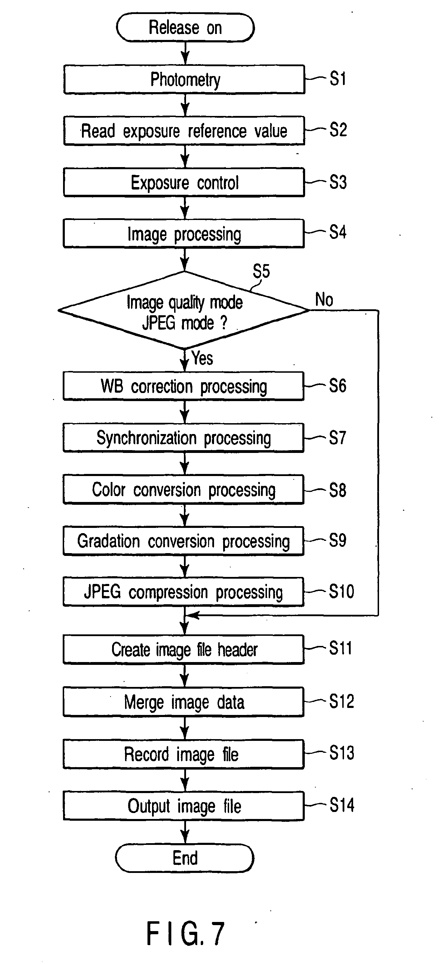

FIG. 7 is a flowchart illustrating a control on the digital camera 100 side. When a non-illustrated release button is turned on, the control of FIG. 7 is started. The photometry is first carried out based on the brightness of an image acquired by the imaging section 101 (step S1). Then, exposure reference values LV0 and LV1 stored in the ROM 107 are read (step S2). Subsequently, an exposure time or the like is calculated based on a result of the photometry at step S1 and the exposure reference values read at step S2. This may be carried out based on an average value of the brightness of the entire image, or it may be performed based on the brightness of a part of the image, e.g., a central portion of the image.

Thereafter, an exposure control is executed based on the calculated exposure time or the like (step S3), and imaging processing such as amplification is performed with respect to a signal obtained from this control (step S4).

Then, whether the image quality mode is the JPEG mode is judged (step S5). If it is determined that the image quality mode is the JPEG mode in the judgment at step S5, the white balance correction processing (step S6), the synchronization processing (step S7), the color conversion processing (step S8), the gradation conversion processing (step S9), and the JPEG compression processing (step S10) are carried out.

Then, header information of the image file is created (step S11), and the created header information and the image data are merged, thereby generating an image file (a JPEG file) (step S12). Furthermore, the generated JPEG file is recorded in the recording medium 108 (step S13).

On the other hand, if it is determined that the image quality mode is not the JPEG mode, namely, it is the raw mode in the judgment at step S5, the processing advances to step S11 from step S5. Moreover, an image file (a raw file) is created like the example of the JPEG file, and the created raw file is recorded in the recording medium 108.

When recording of the image file is terminated, the image file recorded in the recording medium 108 is output to the PC 200 (step S14).

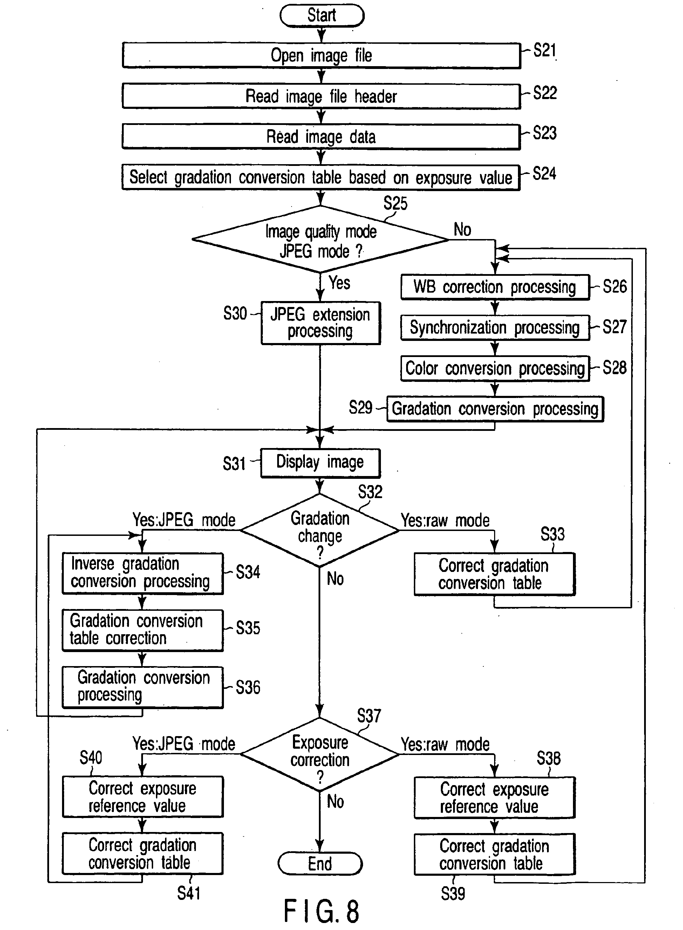

FIG. 8 is a flowchart illustrating a control on the PC 200 side. That is, when the image file is input and this image file is opened by a user (step S21), the header information (step S22) and the image data (step S23) are read. Then, a gradation conversion table is selected based on exposure reference values LV0 and LV1 recorded as the header information of the image file (step S24).

Subsequently, whether the image quality mode of the image data is the JPEG mode is judged based on the header information of the image file (step S25). If it is determined that the image quality mode is not the JPEG mode, namely, it is the raw mode in the judgment at step S25, the white balance correction processing (step S26), the synchronization processing (step S27) and the color conversion processing (step S28) which are equal to those on the digital camera 100 side are executed. Moreover, the gradation conversion processing is effected based on the gradation conversion table selected at step S24 (step S29). On the other hand, if it is determined that the image quality mode is the JPEG mode in the judgment at step S25, the JPEG data is extended (step S30).

After the above-described processing, an image is displayed in a non-illustrated display (step S31). Then, a judgment is made upon whether a gradation change is instructed by a user (step S32).

If it is determined that the gradation change is instructed in the judgment at step S32, processing which differs depending on whether the image quality mode is the raw mode or the JPEG mode is executed. If the image quality mode is the raw mode, the gradation conversion table is corrected as described in connection with FIG. 5A (step S33), and the control then shifts to step S26, thereby performing the image processing. On the other hand, if the image quality mode is the JPEG mode, the inverse gradation conversion processing is carried out with respect to the JPEG extended data (step S34). As a result, image data which is substantially linear with respect to a light quantity of a subject before gradation conversion is generated. Then, the gradation conversion table is corrected (step S35), and the gradation conversion processing based on this corrected gradation conversion table is executed (step S36).

As described above, in this embodiment, if it is determined that the image quality mode is the JPEG mode, the inverse gradation conversion processing is effected before the gradation is changed. As a result, the gradation can be changed with respect to the image data close to the image data in image capturing as compared with an example where the gradation of the JPEG data is directly changed. It is to be noted that the white balance correction or the like may be effected after the inverse gradation conversion processing at step S34.

Additionally, if it is determined that the gradation change is not instructed in the judgment at step S32, a judgment is made upon whether the exposure correction is instructed, i.e., whether an exposure correction value is specified by a user (step S37). If it is determined that the exposure correction is instructed and the image mode is the raw mode in the judgment at step S37, LV0 is corrected in accordance with Expression 1 mentioned above (step S38), then the gradation conversion table is corrected in accordance with this corrected value (step S39). Thereafter, the control returns to step S26. On the other hand, if it is determined that the exposure correction is instructed and the image quality mode is the JPEG mode in the judgment at step S37, LV0 is corrected in accordance with Expression 1 mentioned above (step S40), and the gradation conversion table is then corrected (step S41). Subsequently, the control returns to step S34.

Further, if it is determined that the exposure correction is not instructed in the judgment at step S37, the processing is terminated.

As described above, according to this embodiment, since exposure reference values LV0 and LV1 are recorded as header information when acquiring the raw file, the appropriate gradation conversion processing can be performed with respect to the raw data irrespective of model of camera, design concept of manufacturer or the like. Furthermore, since the quantity of information which is recorded as the header information is small, the transfer rate of an image file is not reduced.

Furthermore, in this embodiment, if it is determined that the image quality mode is the JPEG mode, the inverse gradation conversion processing of the image data is effected, the gradation can be appropriately changed as compared with an example where the gradation or the like of the JPEG data is directly changed.

Moreover, in this embodiment, the exposure reference values are recorded in the image file, and hence the gradation conversion table can be readily and appropriately corrected in order to perform the exposure correction as compared with an example where this processing is manually carried out.

It is to be noted that both LV0 and LV1 are recorded as the exposure reference values together with the image data, but one of these values may be determined as a fixed value and the other one alone may be recorded. For example, LV0 alone which is a value serving as a measurement reference of the ISO sensitivity (LV1 = 118 [eight bits]) may be recorded. Additionally, bit accuracies of LV0 and LV1 are determined as 12 bits and 8 bits in this embodiment, but the present invention is not restricted thereto. For example, each of LV0 and LV1 may be represented by percentage with respect to a saturation level.

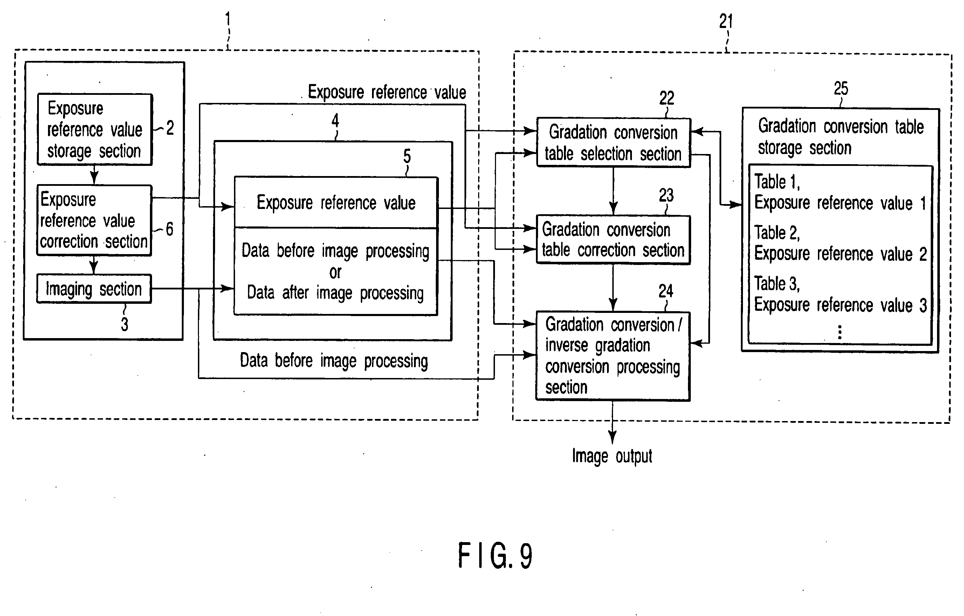

Further, although exposure reference values LV0 and LV1 are values read from the exposure reference value storage section 2 in this embodiment, such an exposure reference value correction section 6 as shown in FIG. 9 may be provided so that the exposure reference values read from the exposure reference value storage section 2 can be corrected. This exposure reference value correction section 6 corrects the exposure reference values under conditions such as presence/absence of flash lamp emission which is determined based on a photometry result or the like.

## Claims

1. An image processing apparatus (200) comprising:

   a file interface (201) for receiving image files, each image file comprising image data before gradation conversion processing is performed and header information, the header information comprising an exposure reference value comprising the value LV0, which is a pixel value of raw data obtained when capturing an image of an even surface under the automatic exposure control, and the value LV1, which is a pixel value after subjecting LV0 to gradation conversion;
   a user interface (205) for inputting an exposure correction value which is used for correcting an exposure of an image;
   exposure reference value changing means in the user interface (205) for changing the exposure > reference value based on the input exposure correction value ;

gradation conversion table storing means (203) for storing gradation conversion tables corresponding to a plurality of exposure reference values;

gradation conversion table selecting means (202) for selecting a gradation conversion table corresponding to the exposure reference value changed by the exposure reference value changing means (205) from the plurality of gradation tables stored in the gradation conversion table storing means (203); and

gradation conversion processing means (206) for performing the gradation conversion processing with respect to the image data input via the file interface (201) based on the gradation conversion table selected by the gradation conversion table selecting means (202).

2. An image processing apparatus (200) comprising:

a file interface (201) for receiving image files, each image file comprising image data before gradation conversion processing is performed and header information, the header information comprising an exposure reference value comprising the value LV0, which is a pixel value of raw data obtained when capturing an image of an even surface under the automatic exposure control, and the value LV1, which is a pixel value after subjecting LV0 to gradation conversion;

gradation conversion table storing means (203) for storing gradation conversion tables corresponding to the plurality of exposure reference values;

gradation conversion table selecting means (202) for selecting a gradation conversion table corresponding to the exposure reference values input by the file interface (201) from the plurality of gradation tables stored in the gradation conversion table storing means (203);

a user interface (205) for inputting an exposure correction value which is used to correct an exposure of an image;

exposure reference value changing means in the user interface (205) for changing the exposure reference value based on the input exposure correction value (205);

gradation conversion table correcting means (204) for correcting the gradation conversion table selected by the gradation conversion table selecting means (202) in accordance with the exposure reference value changed by the exposure reference value changing means (205); and

gradation conversion processing means (206) for performing the gradation conversion processing with respect to the image data input via the file interface (201) based on the gradation conversion table corrected by the gradation conversion table correcting means (204).

3. The image processing apparatus (200) according to claim 1, wherein

the exposure reference value changing means in the user interface (205) are adapted to change the value LV0 in the exposure reference value,

the gradation conversion table storing means (203) are further adapted to store the gradation conversion table as well as a plurality of gradation conversation tables corresponding to changes in the value LV0 of the gradation conversion table, and

the gradation conversion table selecting means (202) are further adapted to perform selection of a gradation conversion table corresponding to the changed value LV0 from the plurality of gradation tables stored in the gradation conversion table storing means (203).

4. The image processing apparatus (200) according to claim 2, wherein

the exposure reference value changing means in the user interface (205) are adapted to change the value LV0 in the exposure reference value, and

the gradation conversion table correcting means (204) are adapted to correct the gradation conversion table in such a manner that the value LV1 is not changed when correcting the gradation conversion table.

5. An image processing system comprising:

an imaging apparatus (100) comprising:

image acquiring means (100) for imaging a subject to acquire image data before at least gradation conversion processing is performed;

exposure reference value storing means (107) for storing an exposure reference value comprising the value LV0, which is a pixel value of raw data obtained when capturing an image of an even surface under the automatic exposure control, and the value LV1, which is a pixel value after subjecting LV0 to gradation conversion;

an image processing section (106) for generating an image file comprising the acquired image data and header information, the header information comprising the exposure reference value; and

a recording medium (108) for recording the image file comprising the image data acquired by the image acquiring means (101) and the exposure reference value stored in the exposure reference value storing means (107); and

the image processing apparatus (200) according to claim 1.

6. An image processing system comprising:

an imaging apparatus (100) comprising:

image acquiring means (101) for imaging a subject to acquire image data before at least gradation conversion processing is performed;

exposure reference value storing means (107) for storing an exposure reference value comprising the value LV0, which is a pixel value of raw data obtained when capturing an image of an even surface under the automatic exposure control, and the value LV1, which is a pixel value after subjecting LV0 to gradation conversion;

an image processing section (106) for generating an image file comprising the acquired image data and header information, the header information comprising the exposure reference value; and

a recording medium (108) for recording the image file comprising the image data acquired by the image acquiring means (101) and the exposure reference value stored in the exposure reference value storing means (107); and

the image processing apparatus (200) according to claim 2.

7. An image processing method comprising:

imaging a subject to acquire image data before at least gradation conversion processing is performed;

generating an image file comprising the acquired image data and header information, the header information comprising an exposure reference value comprising the value LV0, which is a pixel value of raw data obtained when capturing an image of an even surface under the automatic exposure control, and the value LV1, which is a pixel value after subjecting LV0 to gradation conversion;

outputting the generated image file;

inputting an exposure correction value which is used to correct an exposure of an image;

changing the exposure reference value based on the input exposure correction value;

selecting a gradation conversion table corresponding to the changed exposure reference value from a plurality of gradation tables; and

performing the gradation conversion processing to the output image data based on the selected gradation conversion table.

8. An image processing method comprising:

imaging a subject to acquire image data before at least gradation conversion processing is performed;

generating an image file comprising the acquired image data and header information, the header information comprising an exposure reference value comprising the value LV0, which is a pixel value of raw data obtained when capturing an image of an even surface under the automatic exposure control, and the value LV1, which is a pixel value after subjecting LV0 to gradation conversion;

outputting the image file;

selecting a gradation conversion table corresponding to the output exposure reference value from a plurality of gradation tables;

inputting an exposure correction value which is used to correct an exposure of an image;

changing the exposure reference value based on the input exposure correction value;

correcting the selected gradation conversion table in accordance with the changed exposure reference value; and

performing the gradation conversion processing to the output image data based on the corrected gradation conversion table.

**Patentansprüche**

1. Bildverarbeitungsvorrichtung (200), die umfasst:

   eine Datei-Schnittstelle (201) zum Empfangen von Bilddaten, wobei jede Bilddatei Bilddaten vor Durchführung einer Gradationsumwandlungs-Verarbeitung sowie Header-Informationen umfasst und die Header-Informationen einen Belichtungs-Bezugswert umfassen, der den Wert LV0, der ein Pixel-Wert von Raw-Daten ist, die ermittelt werden, wenn ein Bild einer ebenen Fläche mit automatischer Belichtungssteuerung aufgenommen wird, und den Wert LV1 umfasst, der ein Pixel-Wert nach Durchführen der Gradations-Umwandlung von LV0 ist;
   eine Benutzer-Schnittstelle (205) zum Eingeben eines Belichtungs-Korrekturwertes, der zum Korrigieren der Belichtung eines Bildes verwendet wird;
   eine Einrichtung zum Ändern des Belichtungs-Bezugswertes in der Benutzer-Schnitt-stelle (205), mit der der Belichtungs-Bezugswert auf Basis des eingegebenen Belichtungs-Korrekturwertes geändert wird;
   eine Einrichtung (203) zum Speichern von Gradations-Umwandlungstabellen, mit der Gradations-Umwandlungstabellen entsprechend einer Vielzahl von Belichtungs-Bezugswerten gespeichert werden;
   eine Einrichtung (202) zum Auswählen einer Gradations-Umwandlungstabelle, mit der eine Gradations-Umwandlungstabelle entsprechend dem durch die Einrichtung (205) zum Ändern des Belichtungs-Bezugswertes geänderten Belichtungs-Bezugswert aus der Vielzahl in der Einrichtung (203) zum Speichern von Gradations-Umwandlungstabellen gespeicherter Gradationstabellen ausgewählt wird; und
   eine Gradationsumwandlungs-Verarbeitungseinrichtung (206) zum Durchführen der Gradationsumwandlungs-Verarbeitung in Bezug auf die über die Datei-Schnittstelle (201) eingegebenen Bilddaten auf Basis der durch die Einrichtung (202) zum Auswählen einer Gradations-Umwandlungstabelle ausgewählten Gradations-Umwandlungstabelle.

2. Bildverarbeitungsvorrichtung (200), die umfasst:

   eine Datei-Schnittstelle (201) zum Empfangen von Bilddaten, wobei jede Bilddatei Bilddaten vor Durchführung einer Gradationsumwandlungs-Verarbeitung sowie Header-Informationen umfasst und die Header-Informationen einen Belichtungs-Bezugswert umfassen, der den Wert LV0, der ein Pixel-Wert von Raw-Daten ist, die ermittelt werden, wenn ein Bild einer ebenen Fläche mit automatischer Belichtungssteuerung aufgenommen wird, und den Wert LV1 umfasst, der ein Pixel-Wert nach Durchführen der Gradations-Umwandlung von LV0 ist;
   eine Einrichtung (203) zum Speichern von Gradations-Umwandlungstabellen, mit der Gradations-Umwandlungstabellen entsprechend einer Vielzahl von Belichtungs-Bezugswerten gespeichert werden;
   eine Einrichtung (202) zum Auswählen einer Gradations-Umwandlungstabelle, mit der eine Gradations-Umwandlungstabelle entsprechend den über die Datei-Schnittstelle (201) eingegebenen Belichtungs-Bezugswerten aus der Vielzahl in der Einrichtung (203) zum Speichern von Gradations-Umwandlungstabellen gespeicherter Gradationstabellen ausgewählt wird;
   eine Benutzer-Schnittstelle (205) zum Eingeben eines Belichtungs-Korrekturwertes, der zum Korrigieren der Belichtung eines Bildes verwendet wird;
   eine Einrichtung zum Ändern des Belichtungs-Bezugswertes in der Benutzer-Schnitt-stelle (205), mit der der Belichtungs-Bezugswert auf Basis des eingegebenen Belichtungs-Korrekturwertes geändert wird;
   eine Einrichtung (204) zum Korrigieren der Gradations-Umwandlungstabelle, mit der die durch die Einrichtung (202) zum Auswählen einer Gradations-Umwandlungstabelle ausgewählte Gradations-Umwandlungstabelle gemäß dem durch die Einrichtung (205) zum Ändern des Belichtungs-Bezugswertes geänderten Belichtungs-Bezugswert korrigiert wird; und
   eine Gradationsumwandlungs-Verarbeitungseinrichtung (206) zum Durchführen der Gradationsumwandlungs-Verarbeitung in Bezug auf die über die Datei-Schnittstelle (201) eingegebenen Bilddaten auf Basis der durch die Einrichtung (204) zum Korrigieren der Gradations-Umwandlungstabelle korrigierten GradationsUmwandlungs-tabelle.

3. Bildverarbeitungsvorrichtung (200) nach Anspruch 1, wobei
   die Einrichtung zum Ändern des Belichtungs-Bezugswertes in der Benutzer-Schnitt-stelle (205) so eingerichtet ist, dass sie den Wert LV0 in dem Belichtungs-Bezugswert ändert,
   die Einrichtung (203) zum Speichern von Gradations-Umwandlungstabellen des Weiteren so eingerichtet ist, dass sie die Gradations-Umwandlungstabelle sowie eine Vielzahl von Gradations-Umwandlungstabellen entsprechend Änderungen des Wertes LV0 der Gradations-Umwandlungstabelle speichert, und
   die Einrichtung (202) zum Auswählen einer Gradations-Umwandlungstabelle des Weiteren so eingerichtet ist, dass sie Auswahl einer Gradations-Umwandlungstabelle aus der Vielzahl in der Einrichtung (203) zum Speichern von GradationsUmwandlungs-tabellen gespeicherter Gradations-Umwandlungstabellen entsprechend dem geänderten Wert LV0 durchführt.

4.  Bildverarbeitungsvorrichtung (200) nach Anspruch 2, wobei
    die Einrichtung zum Ändern des Belichtungs-Bezugswertes in der Benutzer-Schnitt-stelle (205) so eingerichtet ist, dass sie den Wert LV0 in dem Belichtungs-Bezugswert ändert,
    die Einrichtung (204) zum Korrigieren der Gradations-Umwandlungstabelle so eingerichtet ist, dass sie die Gradations-Umwandlungstabelle so korrigiert, dass der Wert LV1 beim Korrigieren der Gradations-Umwandlungstabelle nicht geändert wird.

5.  Bildverarbeitungssystem, das umfasst:

    eine Bilderzeugungsvorrichtung (100), die umfasst:

    eine Bilderfassungseinrichtung (100), mit der ein Objekt abgebildet wird, um Bilddaten zu erfassen, bevor wenigstens eine Gradations-Umwandlungsverarbeitung durchgeführt wird;
    eine Einrichtung (107) zum Speichern eines Belichtungs-Bezugswertes, der den Wert LV0, der ein Pixel-Wert von Raw-Daten ist, die ermittelt werden, wenn ein Bild einer ebenen Fläche mit automatischer Belichtungssteuerung aufgenommen wird, und den Wert LV1 umfasst, der ein Pixel-Wert nach Durchführen von Gradations-Umwand-lung von LV0 ist;
    einen Bildverarbeitungsabschnitt (106) zum Erzeugen einer Bilddatei, die die erfassten Bilddaten und Header-Informationen umfasst, wobei die Header-Informationen den Belichtungs-Bezugswert umfassen; und
    ein Aufzeichnungsmedium (108) zum Aufzeichnen der Bilddatei, die die durch die Bilderfassungseinrichtung (101) erfassten Bilddaten und den in der Einrichtung (107) zum Speichern eines Belichtungs-Bezugswertes gespeicherten Belichtungs-Bezugswert umfasst; und
    die Bildverarbeitungsvorrichtung (200) nach Anspruch 1.

6.  Bildverarbeitungssystem, das umfasst:

    eine Bilderzeugungsvorrichtung (100), die umfasst:

    eine Bilderfassungseinrichtung (101), mit der ein Objekt abgebildet wird, um Bilddaten zu erfassen, bevor wenigstens eine Gradations-Umwandlungsverarbeitung durchgeführt wird;
    eine Einrichtung (107) zum Speichern eines Belichtungs-Bezugswertes, mit der der Belichtungs-Bezugswert gespeichert wird, der den Wert LV0, der ein Pixel-Wert von Raw-Daten ist, die ermittelt werden, wenn ein Bild auf einer ebenen Fläche mit automatischer Belichtungssteuerung aufgenommen wird, und den Wert LV1 umfasst, der ein Pixel-Wert nach Durchführen der Gradations-Umwandlung von LV0 ist;
    einen Bildverarbeitungsabschnitt (106) zum Erzeugen einer Bilddatei, die die erfassten Bilddaten und Header-Informationen umfasst, wobei die Header-Informationen den Belichtungs-Bezugswert umfassen; und
    ein Aufzeichnungsmedium (108) zum Aufzeichnen der Bilddatei, die die durch die Bilderfassungseinrichtung (101) erfassten Bilddaten und den in der Einrichtung (107) zum Speichern eines Belichtungs-Bezugswertes gespeicherten Belichtungs-Bezugswert umfasst; und
    die Bildverarbeitungsvorrichtung (200) nach Anspruch 2.

7.  Bildverarbeitungsverfahren, das umfasst:

    Abbilden eines Objektes, um Bilddaten zu erfassen, bevor wenigstens eine Gradations-Umwandlungsverarbeitung durchgeführt wird;
    Erzeugen einer Bilddatei, die die erfassten Bilddaten sowie Header-Informationen umfasst, wobei die Header-Informationen einen Belichtungs-Bezugswert umfassen, der den Wert LV0, der ein Pixel-Wert von Raw-Daten ist, die ermittelt werden, wenn ein Bild einer ebenen Fläche mit automatischer Belichtungssteuerung aufgenommen wird, und den Wert LV1 umfasst, der ein Pixel-Wert nach Durchführen der Gradations-Umwandlung von LV0 ist;
    Ausgeben der erzeugten Bilddatei;
    Eingeben eines Belichtungs-Korrekturwertes, der verwendet wird, um eine Belichtung eines Bildes zu korrigieren;
    Ändern des Belichtungs-Bezugswertes auf Basis des eingegebenen Belichtungs-Korrekturwertes;
    Auswählen einer Gradations-Umwandlungstabelle aus einer Vielzahl von Gradationstabellen entsprechend dem geänderten Belichtungs-Bezugswert; und

Durchführen der Gradations-Umwandlungsverarbeitung der ausgegebenen Bilddaten auf Basis der ausgewählten Gradations-Umwandlungstabelle.

8. Bildverarbeitungsverfahren, das umfasst:

Abbilden eines Objektes, um Bilddaten zu erfassen, bevor wenigstens eine Gradations-Umwandlungsverarbeitung durchgeführt wird;

Erzeugen einer Bilddatei, die die erfassten Bilddaten sowie Header-Informationen umfasst, wobei die Header-Informationen einen Belichtungs-Bezugswert umfassen, der den Wert LV0, der ein Pixel-Wert von Raw-Daten ist, die ermittelt werden, wenn ein Bild einer ebenen Fläche mit automatischer Belichtungssteuerung aufgenommen wird, und den Wert LV1 umfasst, der ein Pixel-Wert nach Durchführen der Gradations-Umwandlung von LV0 ist;

Ausgeben der Bilddatei;

Auswählen einer Gradations-Umwandlungstabelle aus einer Vielzahl von Gradationstabellen entsprechend dem ausgegebenen Belichtungs-Bezugswert;

Eingeben eines Belichtungs-Korrekturwertes, der verwendet wird, um eine Belichtung eines Bildes zu korrigieren;

Ändern des Belichtungs-Bezugswertes auf Basis des eingegebenen Belichtungs-Korrekturwertes;

Korrigieren der ausgewählten Gradations-Umwandlungstabelle gemäß dem geänderten Belichtungs-Bezugswert; und

Durchführen der Gradations-Umwandlungsverarbeitung der ausgegebenen Bilddaten auf Basis der korrigierten Gradations-Umwandlungstabelle.

**Revendications**

1. Appareil de traitement d'image (200), comprenant :

une interface fichier (201), pour recevoir des fichiers image, chaque fichier image comprenant des données image avant l'accomplissement du traitement de conversion avec gradation et une information d'en-tête, l'information d'en-tête comprenant une valeur de référence d'exposition comprenant la valeur LV0, qui est une valeur de pixel des données brutes obtenue lors de la capture d'une image sur une surface plane sous une commande automatique d'exposition, et la valeur LV1, qui est une valeur de pixel, après la soumission de LV0 à une conversion avec gradation ;

une interface utilisateur (205), pour introduire une valeur de correction d'exposition, utilisée pour corriger une exposition d'une image ;

des moyens de modification de valeur de référence d'exposition (205), dans l'interface utilisateur, pour modifier la valeur de référence d'exposition d'après la valeur de correction d'exposition introduite ;

des moyens de stockage de table de conversion avec gradation (203), pour stocker des tables de conversion avec gradation correspondant à une pluralité de valeurs de référence d'exposition ;

des moyens de sélection de table de conversion avec gradation (202), pour sélectionner une table de conversion avec gradation correspondant à la valeur de référence d'exposition modifiée par les moyens de modification de valeur de référence d'exposition (205), à partir de la pluralité de tables à gradation stockées dans les moyens de stockage de table de conversion avec gradation (203) ; et

des moyens de traitement par conversion avec gradation (206), pour effectuer le traitement de conversion avec gradation par rapport aux données image introduites via l'interface fichier (201), d'après la table de conversion avec gradation sélectionnée par les moyens de sélection de table de conversion avec gradation (202).

2. Appareil de traitement d'image (200), comprenant :

une interface fichier (201), pour recevoir des fichiers image, chaque fichier image comprenant des données image avant l'accomplissement du traitement de conversion avec gradation et une information d'en-tête, l'information d'en-tête comprenant une valeur de référence d'exposition comprenant la valeur LV0, qui est une valeur de pixel des données brutes obtenue lors de la capture d'une image sur une surface plane sous une commande automatique d'exposition, et la valeur LV1, qui est une valeur de pixel, après la soumission de LV0 à une conversion avec gradation ;

des moyens de stockage de table de conversion avec gradation (203), pour stocker des tables de conversion avec gradation correspondant à la pluralité de valeurs de référence d'exposition ;

des moyens de sélection de table de conversion avec gradation (202), pour sélectionner une table de conversion avec gradation correspondant aux valeurs de référence d'exposition introduite par l'interface fichier (201), à partir de la pluralité de tables de gradation stockées dans les moyens de stockage de table de conversion avec gradation (203) ;

une interface utilisateur (205), pour introduire une valeur de correction d'exposition, utilisée pour corriger une exposition d'une image ;

des moyens de modification de valeur de référence d'exposition (205), dans l'interface utilisateur, pour modifier la valeur de référence d'exposition d'après la valeur de correction d'exposition introduite ;

des moyens de correction de table de conversion avec gradation (204), pour corriger la table de conversion avec gradation sélectionnée par les moyens de sélection de table de conversion avec gradation (202), selon la valeur de référence d'exposition modifiée par les moyens de modification de valeur de référence d'exposition (205) ; et

des moyens de traitement par conversion avec gradation (206), pour effectuer le traitement de conversion avec gradation par rapport aux données image introduites via l'interface fichier (201), d'après la table de conversion avec gradation corrigée par les moyens de correction de table de conversion avec gradation (204).

3. Appareil de traitement d'image (200) selon la revendication 1, dans lequel

les moyens de modification de valeur de référence d'exposition (205), dans l'interface utilisateur, sont adaptés pour modifier la valeur LV0 dans la valeur de référence d'exposition ;

les moyens de stockage de table de conversion avec gradation (203) sont en outre adaptés pour stocker la table de conversion avec gradation, ainsi qu'une pluralité de tables de conversion avec gradation correspondant à des modifications apportées à la valeur LV0 de la table de conversion avec gradation, et

les moyens de sélection de table de conversion avec gradation (202) sont en outre adaptés pour effectuer une sélection d'une table de conversion avec gradation correspondant à la valeur LV0 modifiée, à partir de la pluralité de tables de gradation stockées dans les moyens de stockage de table de conversion avec gradation (203).

4. Appareil de traitement d'image (200) selon la revendication 2, dans lequel

les moyens de modification de valeur de référence d'exposition (205), dans l'interface utilisateur, sont adaptés pour modifier la valeur LV0 dans la valeur de référence d'exposition ; et

les moyens de correction de table de conversion avec gradation (204) sont adaptés pour corriger la table de conversion avec gradation, de manière que la valeur LV1 ne soit pas modifiée lorsqu'on procède à la correction de la table de conversion avec gradation.

5. Système de traitement d'image, comprenant :

un appareil d'imagerie (100), comprenant :

des moyens d'acquisition d'image (100), pour imager un sujet, de manière à acquérir des données image avant de procéder au moins à un traitement de conversion avec gradation ;

des moyens de stockage de valeur de référence d'exposition (107), pour stocker une valeur de référence d'exposition comprenant la valeur LV0, qui est une valeur de pixel des données brutes obtenue lors de la capture d'une image sur une surface plane sous une commande automatique d'exposition, et la valeur LV1, qui est une valeur de pixel, après la soumission de LV0 à une conversion avec gradation ;

une section de traitement d'image (106), pour générer un fichier image comprenant les données image acquises et information d'en-tête, l'information d'entête comprenant la valeur de référence d'exposition ; et

un milieu d'enregistrement (108), pour enregistrer le fichier image comprenant les données image, acquises par les moyens d'acquisition d'image (101), et la valeur de référence d'exposition, stockée dans les moyens de stockage de valeur de référence d'exposition (107) ; et

l'appareil de traitement d'image (200) selon la revendication 1.

6. Système de traitement d'image, comprenant :

un appareil d'imagerie (100), comprenant :

des moyens d'acquisition d'image (101), pour imager un sujet, de manière à acquérir des données image avant de procéder au moins à un traitement de conversion avec gradation ;

des moyens de stockage de valeur de référence d'exposition (107), pour stocker une valeur de référence d'exposition comprenant la valeur LV0, qui est une valeur de pixel des données brutes obtenue lors de la capture d'une image sur une surface plane sous une commande automatique d'exposition, et la valeur LV1, qui est une valeur de pixel, après la soumission de LV0 à une conversion avec gradation ;

une section de traitement d'image (106), pour générer un fichier image comprenant les données image acquises et information d'en-tête, l'information d'entête comprenant la valeur de référence d'exposition ; et

un milieu d'enregistrement (108), pour enregistrer le fichier image comprenant les données image, acquises par les moyens d'acquisition d'image (101), et la valeur de référence d'exposition, stockée dans les moyens de stockage de valeur de référence d'exposition (107) ; et

l'appareil de traitement d'image (200) selon la revendication 2.

7. Procédé de traitement d'image, comprenant :

l'imagerie d'un sujet, de manière à acquérir des données image avant de procéder à au moins un traitement de conversion avec gradation ;

la génération d'un fichier image comprenant les données images acquises et une information d'en-tête, l'information d'en-tête comprenant une valeur de référence d'exposition comprenant la valeur LV0, qui est une valeur de pixel des données brutes obtenue lors de la capture d'une image sur une surface plane sous une commande automatique d'exposition, et la valeur LV1, qui est une valeur de pixel, après la soumission de LV0 à une conversion avec gradation ;

la fourniture en sortie du fichier image généré ;

l'introduction d'une valeur de correction d'exposition, utilisée pour corriger une exposition d'une image ;

la modification de la valeur de référence d'exposition, d'après la valeur de correction d'exposition introduite ;

la sélection d'une table de conversion avec gradation, correspondant à la valeur de référence d'exposition modifiée, à partir d'une pluralité de tables de gradation ; et

l'accomplissement du traitement de conversion avec gradation aux données image produites, d'après la table de conversion avec gradation corrigée.

8. Procédé de traitement d'image, comprenant :

l'imagerie d'un sujet, de manière à acquérir des données image avant de procéder à au moins un traitement de conversion avec gradation ;

la génération d'un fichier image comprenant les données images acquises et une information d'en-tête, l'information d'en-tête comprenant une valeur de référence d'exposition comprenant la valeur LV0, qui est une valeur de pixel des données brutes obtenue lors de la capture d'une image sur une surface plane sous une commande automatique d'exposition, et la valeur LV1, qui est une valeur de pixel, après la soumission de LV0 à une conversion avec gradation ;

la fourniture en sortie du ficher image ;

la sélection d'une table de conversion avec gradation, correspondant à la valeur de référence d'exposition de sortie à partir d'une pluralité de tables de gradation ;

l'introduction d'une valeur de correction d'exposition, utilisée pour corriger une exposition d'une image ;

la modification de la valeur de référence d'exposition, d'après la valeur de correction d'exposition introduite ;

la correction de la table de conversion avec gradation sélectionnée, selon la valeur de référence d'exposition modifiée ; et

l'accomplissement du traitement de conversion avec gradation aux données image produites, d'après la table de conversion avec gradation corrigée.

F I G. 1

FIG.2

**FIG. 3A**

```
                                                            200
                                          201                                                       203
  ┌──────────────────┐                                    ┌─────202          ┌─────────────────────┐
  │ Exposure control │         ┌──────────┐      ┌────────────────────────┐  │ Gradation conversion table │
  │   target value   │────────▶│          │─────▶│ Gradation conversion table │  │   storage section   │
  │         5        │         │          │      │    selection section   │◀─▶│                     │
  ├──────────────────┤         │   File   │      └────────────────────────┘  └─────────────────────┘
  │                  │         │interface │                 │                          │
  │    Image data    │         │          │      ┌────────────────────────┐  ┌─────────────────────┐
  │  (raw data or    │         │          │─────▶│ Gradation conversion table │◀─│   User interface    │
  │   JPEG data)     │         │          │      │   correction section   │  │                     │
  │                  │         └──────────┘      └────────────────────────┘  └─────────────────────┘
  └──────────────────┘                                     │  204                     205
                                                           │  206
                                               ┌────────────────────────┐
                                               │ Image processing section │◀─
                                               └────────────────────────┘
                                                           │
                                                           ▼
                                                     Image output
```

**FIG. 3B**

|  |  | LV0 (12bit) |  |  |
|---|---|---|---|---|
|  |  | 480 | 580 | 640 |
| LV1 (8bit) | 130 | Table 1 | Table 2 | Table 3 |
|  | 140 | Table 4 | Table 5 | Table 6 |
|  | 150 | Table 7 | Table 8 | Table 9 |

FIG. 4

Output value (8bit)

Table 7

Table 3

150

130

480 640

Input value (12bit)

FIG. 5A

Output value (8bit)

Before correction

Contrast Hi

Contrast Low

LV1

LV0

Input value (12bit)

FIG. 5B

Output value (8bit)

Contrast Hi

Contrast Low

Before correction

LV1

0

log2 (Input value / LV0)

FIG. 6A

Output value (8bit)

Before correction

Exposure correction +

Exposure correction −

LV1

LV0+ LV0 LV0- Input value (12bit)

FIG. 6B

Output value (8bit)

Exposure correction +

Exposure correction −

Before correction

LV1

0 log$_2$ (Input value / LV0)

FIG. 6C

255

Exposure correction + (prior art)

Exposure correction +

Before correction

Exposure correction −

Exposure correction − (prior art)

Output value (8bit)

log$_2$ (Input value / LV0) Saturation level

Release on

Photometry — S1

Read exposure reference value — S2

Exposure control — S3

Image processing — S4

S5

Image quality mode
JPEG mode ? — No

Yes

WB correction processing — S6

Synchronization processing — S7

Color conversion processing — S8

Gradation conversion processing — S9

JPEG compression processing — S10

Create image file header — S11

Merge image data — S12

Record image file — S13

Output image file — S14

End

F I G. 7

```
                    ( Start )
                        │
┌───────────────────────────────────────────────┐
│              Open image file                   │─ S21
└───────────────────────────────────────────────┘
                        │
┌───────────────────────────────────────────────┐
│            Read image file header              │─ S22
└───────────────────────────────────────────────┘
                        │
┌───────────────────────────────────────────────┐
│              Read image data                   │─ S23
└───────────────────────────────────────────────┘
                        │
┌───────────────────────────────────────────────┐
│ Select gradation conversion table based on exposure value │─ S24
└───────────────────────────────────────────────┘
                        │        S25
                   ◇ Image quality mode            No
                     JPEG mode ? ◇──────────────────────┐
                        │ Yes                            │
                        │              ┌──────────────────────────┐
         S30 ┌────────────────┐        │  WB correction processing │─ S26
             │ JPEG extension │        └──────────────────────────┘
             │  processing    │        ┌──────────────────────────┐
             └────────────────┘        │ Synchronization processing │─ S27
                        │              └──────────────────────────┘
                        │              ┌──────────────────────────┐
                        │              │ Color conversion processing │─ S28
                        │              └──────────────────────────┘
                        │       S29 ┌──────────────────────────┐
                        │           │ Gradation conversion processing │
                        │           └──────────────────────────┘
                        │
         S31 ┌────────────────┐
             │ Display image  │
             └────────────────┘
                        │        S32
     Yes:JPEG mode  ◇ Gradation  ◇  Yes:raw mode          S33
   ┌───────────────── change ? ──────────────┐   ┌──────────────────┐
   │                   │ No                   │   │ Correct gradation │
┌──────────────────┐   │                      │   │ conversion table  │
│ Inverse gradation│   │                      └──>└──────────────────┘
│ conversion       │─ S34
│ processing       │
└──────────────────┘
┌──────────────────┐
│ Gradation        │
│ conversion table │─ S35
│ correction       │
└──────────────────┘
┌──────────────────┐
│ Gradation        │
│ conversion       │─ S36
│ processing       │
└──────────────────┘
                        │        S37
     Yes:JPEG mode  ◇ Exposure   ◇  Yes:raw mode
   ┌─S40─────────── correction ? ──────────────┐   S38
┌──────────────────┐   │ No                    ┌──────────────────┐
│ Correct exposure │   │                       │ Correct exposure │
│ reference value  │   │                       │ reference value  │
└──────────────────┘ ( End )                   └──────────────────┘
┌──────────────────┐                           ┌──────────────────┐
│ Correct gradation│                           │ Correct gradation│
│ conversion table │                           │ conversion table │
└──────────────────┘                           └──────────────────┘
        S41                                           S39
```

## F I G. 8

Exposure reference value

**1**

Exposure reference value storage section ~2

Exposure reference value correction section ~6

Imaging section

3

**4**

**5**

Exposure reference value

Data before image processing
or
Data after image processing

Data before image processing

**21**

Gradation conversion table selection section **22**

Gradation conversion table correction section **23**

Gradation conversion / inverse gradation conversion processing section **24**

Gradation conversion table storage section **25**

Table 1,
Exposure reference value 1

Table 2,
Exposure reference value 2

Table 3,
Exposure reference value 3

...

Image output

FIG. 9

EP 1 578 110 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003242163 A
- US 20030174886 A1
- EP 1523182 A1
- US 20020036697 A1